# EUROPÄISCHE PATENTSCHRIFT

(11) **EP 0 694 430 B1**
(45) Veröffentlichungstag und Bekanntmachung des Hinweises auf die Patenterteilung: **22.04.1998**
(21) Anmeldenummer: 95111333.1
(22) Anmeldetag: 19.07.1995
(51) Int. Cl.: B60K 17/32

(54) **Pendelachse für Arbeitsfahrzeug**
Pendulum axle for utility vehicle
Essieu oscillant pour véhicule utilitaire

(30) Priorität: 29.07.1994 US 282374
(43) Veröffentlichungstag der Anmeldung: 31.01.1996
(73) Patentinhaber: DEERE & COMPANY, Moline, Illinois 61265 (US)
(72) Erfinder: Lewis, David Gerald, Cedar Falls 50613 (US); Rowland, Rodney Keith, 628 00 Brno-Lisen (CZ)
(74) Vertreter: Feldmann, Bernhard

(56) Entgegenhaltungen:
- FR-A- 672 110
- FR-E- 39 978

## Beschreibung

Die Erfindung betrifft ein Arbeitsfahrzeug, beispielsweise einen Ackerschlepper, der im Oberbegriff des Patentanspruchs 1 angegebenen Gattung. Derartige Arbeitsfahrzeuge sind wohlbekannt. Sie enthalten einen Motor, ein durch den Motor angetriebenes Getriebe mit einem Ausgangsteil, einen sich im wesentlichen in Fahrzeuglängsrichtung erstreckenden Rahmen und eine Achse. Die Achse ist unter dem Rahmen im wesentlichen quer zur Rahmenlängsausrichtung angeordnet und mit dem Rahmen über eine im wesentlichen in Fahrzeuglängsrichtung ausgerichtete Pendelachse pendelnd verbunden. Die Achse weist lenkbare Räder, eine antriebsmäßig mit den Rädern verbunden Eingangswelle sowie eine antriebsmäßig mit der Getriebeausgangsteil verbundene Antriebswelle auf. Die Räder sind an den Enden der Achse angeordnet und zur Lenkung an diesen verdrehbar angelenkt. Die Drehachse der Antriebswelle erstreckt sich zwischen dem Ausgangsteil und der Achse.

Das Pflanzen, das Kultivieren und andere Anbau und Erntearbeiten erfordern eine genaue Manövrierbarkeit des Arbeitsfahrzeugs in engen Bearbeitungsreihen. Viele Schlepper mit mechanischem Frontantrieb (MFWD) und großen Vorderrädern sind nicht sehr wendig.

Um die Hinterräder zu unterstützen, hat der typische MFWD-Schlepper eine Vorderachse, die pendelnd im vorderen Bereich des Schlepperrahmens aufgehängt ist, so daß sie sich um eine in Fahrzeuglängsrichtung ausgerichtete Achse, die Pendelachse genannt wird, verschwenken läßt. Die Vorderachse enthält ein Gehäuse, welches ein Differentialgetriebe und sich gegenüberliegende Antriebsachsen beherbergt. An den äußeren sich gegenüberliegenden Enden trägt die Achse Achsschenkelbolzen, an denen die angetriebenen Vorderräder derart befestigt sind, daß ein Lenken der angetriebenen Vorderräder möglich ist. Wenn große Vorderräder verwendet werden, wird der maximal mögliche Lenkeinschlag durch den Schlepperaufbau und dessen Konstruktion in unerwünschter Weise begrenzt. Solch eine Begrenzung kann ihre Ursache im Anschlagen der Räder oder der an den Achsschenkelbolzen befestigten sich mit den Rädern bewegenden Kotschützer gegen den Rahmen haben.

Die Leistung des Motors wird zu der Vorderachse über einen Antriebswelle übertragen, die sich zwischen der Vorderachse und einem weiter hinten angeordneten Getriebe erstreckt. Die Antriebswelle enthält üblicherweise an ihren beiden Enden Kreuzgelenke, um Fehlausrichtungen zu kompensieren, welche durch das Pendeln der Vorderachse verursacht werden. Der Raumbedarf, der wegen der Verwendung der Kreuzgelenke erforderlich ist, engt die Bewegungsfreiheit für einen maximalen Lenkeinschlag erheblich ein, insbesondere dann, wenn die Achse um die Pendelachse maximal auspendelt. Ferner muß die Antriebswelle abgeschirmt bzw. abgedeckt werden, was weiteren Raum in Anspruch nimmt und die Wendefreiheit der Räder zusätzlich einschränkt.

Die Manövrierfähigkeit des Schleppers kann verbessert werden durch eine Vergrößerung der Wendefreiheit der Räder und durch eine Steigerung der Sicht von der Kabine aus an der Achse vorbei auf den Boden. Die US-A-4 225 151 zeigt eine Konstruktion zur Erhöhung der Manövrierbarkeit eines MFWD-Schleppers, bei der die lenkbaren Vorderräder mit großen Nachlaufwinkeln versehen sind, so daß sich die Räder beim Einschlagen unter den Rumpf des Schleppers neigen. Jedoch ist auch trotz dieses Neigens der Wenderadius des Schleppers noch in unerwünschter Weise begrenzt, insbesondere dann, wenn die Achse maximal auspendelt.

Die US-A-5 152 364 beschreibt eine Schlepperkonstruktion, bei der ein vergrößerter Wendefreiraum dadurch erreicht wird, daß der Motor über der Achse angeordnet wird und zu einem davor liegenden Kühler beabstandet ist, so daß sich ein freier Raum ergibt, in den selbst große Räder beim Lenken und Einschlagen der Räder eingreifen. Dennoch kann die Bewegung der Räder bei maximalem Einschlag während einer Pendelung der Achse durch die Lage und Größe der Antriebswelle der Vorderachse und durch zugehörige Abdeckungen eingeengt sein.

Trotz der bei den bekannten Arbeitsfahrzeugen erreichten Verbesserungen der Manövrierfähigkeit ist es wünschenswert diese weiter zu verbessern.

Die der Erfindung zugrunde liegende Aufgabe wird darin gesehen, ein Arbeitsfahrzeug der eingangs genannten Art anzugeben, bei dem die Manövrierfähigkeit verbessert wird. Insbesondere sollen die Wendefreiheit für die Räder erhöht und der seitliche Raumbedarf für die Übertragung der Antriebsleistung an die pendelnde Achse vermindert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Lösung findet bevorzugt Anwendung bei einem Arbeitsfahrzeug mit einer Vorderachse mit einem mechanischen Frontantrieb und einer in der Vorderachse integrierten Antriebsachse. Die Vorderachse enthält ein Differentialgehäuse mit gegenüberliegenden seitlichen Antriebsachsen, die in Achsgehäusen untergebracht sind, welche an dem Differentialgehäuse befestigbar sind. Das Differentialgehäuse und die Achsgehäuse sind gegenüber dem Fahrzeug um eine Pendelachse verschwenkbar. Die Pendelachse liegt oberhalb der Mittellinie der Vorderachse. Die Antriebsachse, die der Übertragung der Antriebsleistung von einem weiter hinten angeordneten Umschaltgetriebe zu der Vorderachse dient, liegt im wesentlichen kollinear zu der Pendelachse. Eine Eingangswelle des Differentialgetriebes ist im wesentlichen parallel zur Pendelachse ausgerichtet und steht mit der Antriebswelle antriebsmäßig in Verbindung.

Anhand der Zeichnung, die ein Ausführungsbeispiel der Erfindung zeigt, werden nachfolgend die Erfindung sowie weitere Aufgaben, Vorteile und vorteilhafte Weiterbildungen und Ausgestaltungen der Erfindung näher beschrieben und erläutert. Die Erfindung wird anhand eines Schleppers beschrieben, sie läßt sich jedoch ohne weiteres auch an einer Vielzahl von Arbeitsfahrzeugen, insbesondere auch aus dem Nichtagrarbereich verwenden.

Es zeigt:
- Fig. 1: die perspektivische Darstellung eines Ackerschleppers mit erfindungsgemäßer Vorrichtung,
- Fig. 2: die vordere Schnittperspektive eines Schleppers gemäß Fig. 1 aus der die vertikale Lage der Pendelachse ersichtlich ist,
- Fig. 3: die ausschnittweise Ansicht einer erfindungsgemäßen Vorrichtung von unten, aus der die Lenkachse und die Längslage der Pendelachse hervorgeht, und
- Fig. 4: die ausschnittweise Seitenschnittansicht einer erfindungsgemäßen Vorrichtung.

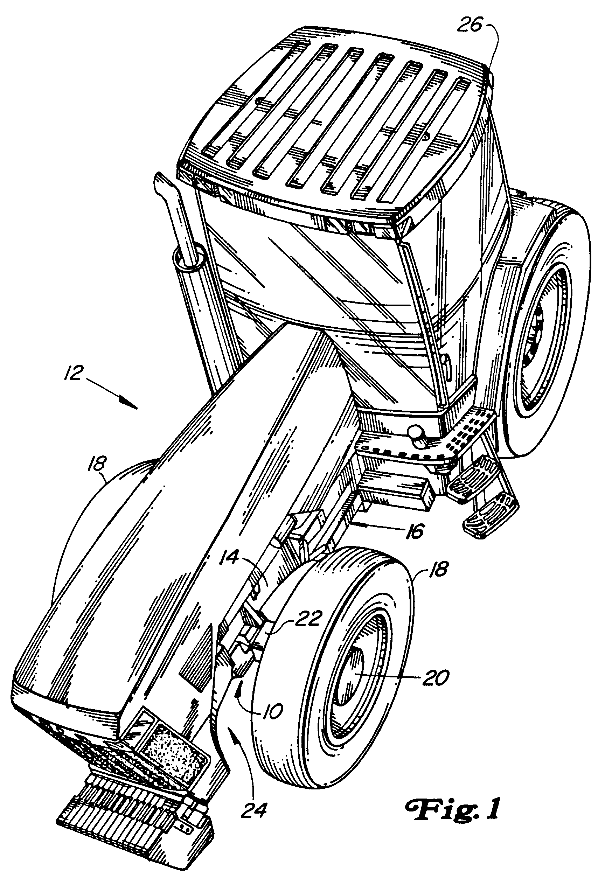

Wie aus Fig. 1 hervorgeht, verkörpert sich die vorliegende Erfindung in einer Vorrichtung 10, durch die sich die Manövrierfähigkeit eines Arbeitsfahrzeugs 12 verbessern läßt. Das Arbeitsfahrzeug 12, das in dem vorliegenden Fall als Ackerschlepper dargestellt ist, weist einen durch einen Rahmen 16 getragenen Motor 14 auf. Verschiedene funktionelle Teile des Arbeitsfahrzeugs 12, wie beispielsweise der Motor 14 und das Umschaltgetriebe 45 können so ausgebildet sein, daß sie Teile des Rahmens 16 bilden.

Eine Vorderachse 22 ist unter dem Motor 14 angeordnet und schwenkbar am Rahmen 16 befestigt. Es handelt sich um eine angetriebene Achse, die auf bekannte Weise an ihren beiden äußeren Enden Achsschenkel aufweist, welche Planetenendantriebe tragen. Auf den Radnaben oder Enden 20 der Vorderachse 22 sind lenkbare Antriebsräder 18 befestigt. Die Enden 20 werden durch die Getriebeausgänge der Planetenendantriebe gebildet. Die Vorderachse 22 enthält eine Ummantelung oder ein Differentialgehäuse 40, welches im wesentlichen quer zur Fahrzeuglängsachse ausgerichtet und hinsichtlich der Pendelachse 28 symmetrisch ausgebildet ist. An dem Differentialgehäuse 40 sind durch Schrauben oder dergleichen Achsgehäuse 42 befestigt, die quer zur Fahrzeuglängsachse auf entgegengesetzten Seiten des Differentialgehäuses 40 von diesem abstehen. Auch wenn dies in der Zeichnung nicht dargestellt wurde, versteht es sich für den Fachmann von selbst, daß die Achsschenkelbolzen von den äußeren Enden der Achsgehäuse 42 getragen werden und daß die Planetenendantriebe, die die Enden 20 enthalten, an den Achsschenkelbolzen befestigt sind.

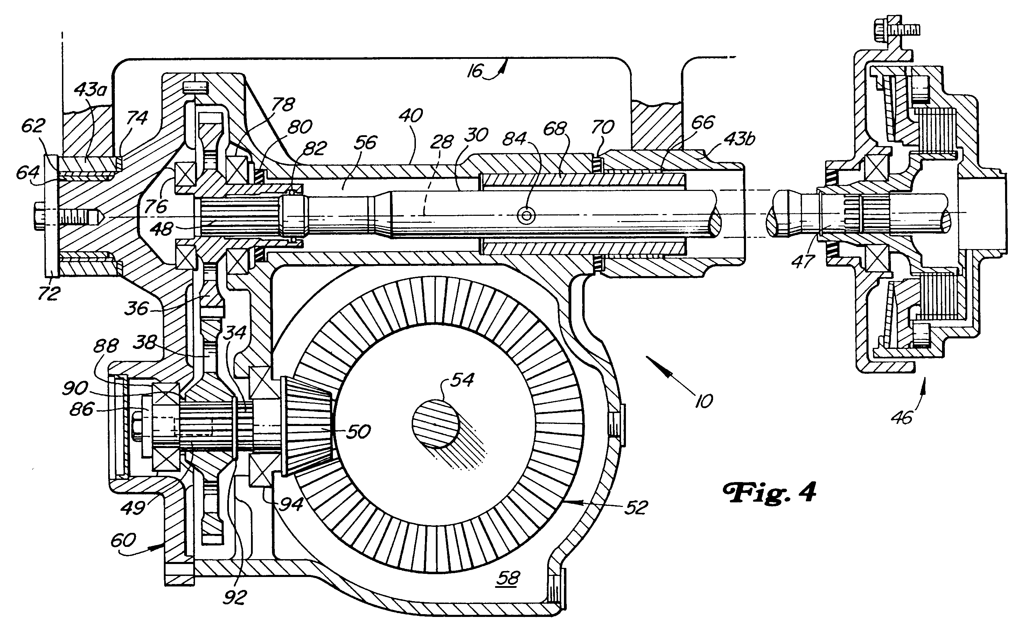

Die Vorderachse 22 enthält ein Differentialgetriebe 52, welches in einer Kammer 58, die durch des Differentialgehäuse 40 gebildet wird, untergebracht ist, sowie Antriebsachsen 54 (siehe Fig. 4), die in den zugehörigen Achsgehäusen 42 angeordnet sind. Die äußeren Enden der Antriebsachsen 54 sind über nicht dargestellte Kreuzgelenke mit den Planetenendantieben verbunden. Das Differentialgetriebe 52 ist wirkungsmäßig mit der Kraftabgabeseite 50 einer Differentialeingangswelle 34 verbunden.

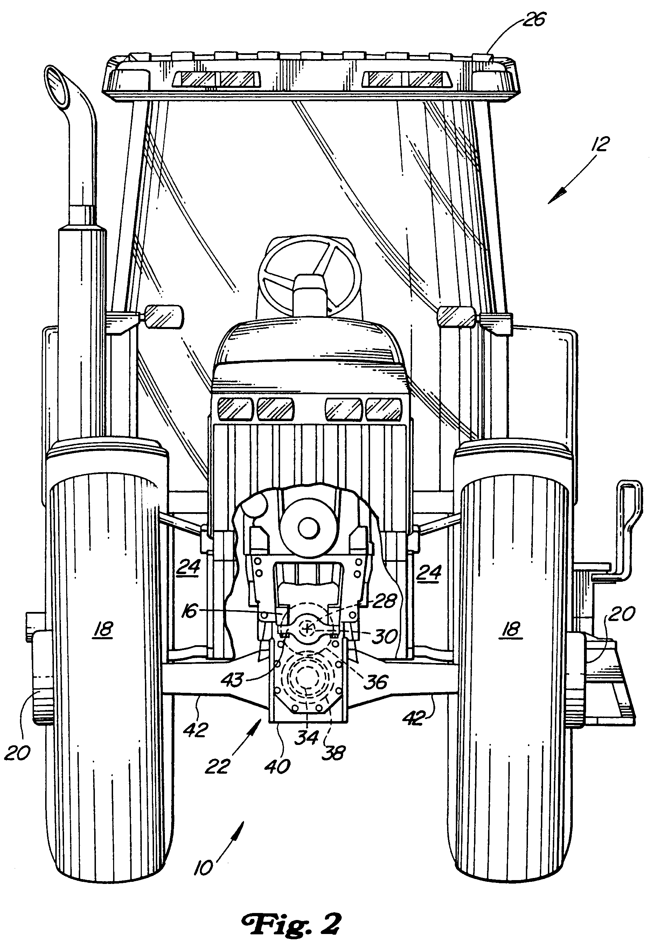

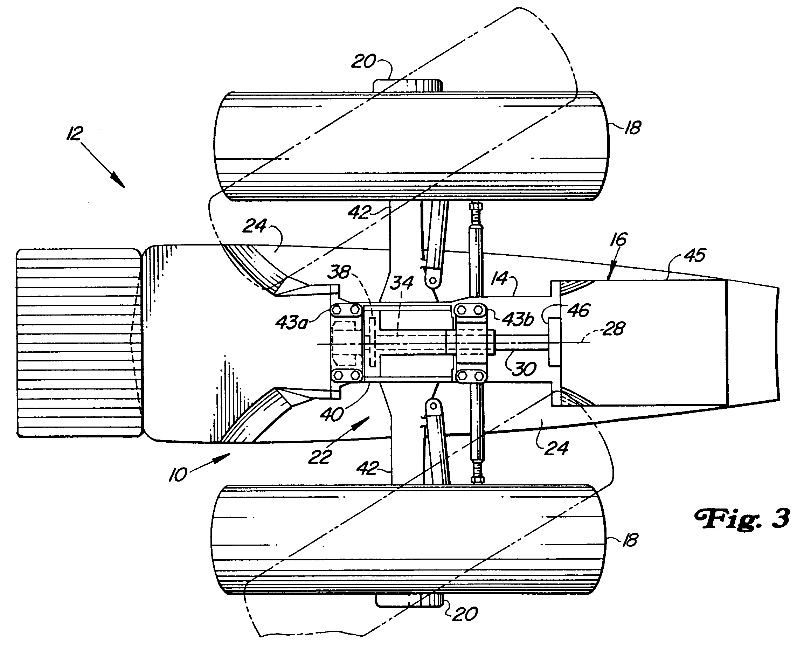

Wie aus den Fig. 2 und 3 hervorgeht, ist die Vorderachse 22 pendelnd um eine sich in Fahrzeuglängsrichtung erstreckende Pendelachse 28 aufgehängt. Wenn sich das Arbeitsfahrzeug 12 über den Boden, insbesondere über unebenen Boden bewegt, pendelt die Vorderachse 22 um die Pendelachse 28, so daß alle vier Räder des Arbeitsfahrzeugs 12 ständig in engem Kontakt mit dem Boden bleiben. Zu diesem Zweck ist wenigstens eine Drehaufhängung 43 am Rahmen 16 befestigt, wie es aus den Fig. 2 und 3 hervorgeht. Die wenigstens eine Drehaufhängung 43 enthält vorzugsweise vordere und hintere Pendellager oder Pendelhülsen 43a, 43b, die am Rahmen 16 im Bereich der vorderen und der hinteren Seite des Differentialgehäuses 40 der Vorderachse 22 festgeschraubt sein können. Die Pendelhülsen 43a, 43b stellen vordere und hintere Pendelbefestigungen dar, über die die Vorderachse 22 an dem Rahmen 16 befestigt ist und sich um eine in Fahrzeuglängsrichtung ausgerichtete Pendelachse 28, die oberhalb der Mittellinie der Antriebsachse 54 liegt, verschwenken läßt.

Das vordere Pendellager 43a nimmt einen runden Vorsprung oder Zapfen, der an einem Verschlußdeckel 60 des Differentialgehäuses 40 angeformt ist, drehbar auf. Der Verschlußdeckel 60 ist an dem Hauptteil des Differentialgehäuses 40 festgeschraubt. Vorzugsweise trägt das vordere Pendellager 43a eine vordere Laufbüchse 62, die eine Verschleißhülse 64 trägt, welche ihrerseits den Zapfen des Verschlußdeckels 60 trägt. Eine Rückhalteplatte 72 ist mit dem Verschlußdeckel 60 verschraubt und stößt gegen das vordere Pendellager 43a, die vordere Laufbüchse 62 und die Verschleißhülse 64. Eine Druckscheibe 74 ist zwischen dem vorderen Pendellager 43a und dem Verschlußdeckel 60 angeordnet.

Das hintere Pendellager 43b trägt vorzugsweise eine hintere Laufbüchse 66, die eine rohrförmige Pendelabstützung 68 trägt, welche ihrerseits das Differentialgehäuse 40 trägt. Die hintere Laufbüchse 66, die Pendelabstützung 68, das Differentialgehäuse 40 und der Verschlußdeckel 60 wirken zusammen und bilden eine Wellenabstützung, die die Antriebswelle 30 drehbar aufnimmt.

Durch den oberen Bereich des Differentialgehäuses 40 erstreckt sich eine Bohrung 56, die im wesentlichen konzentrisch zu der Pendelachse 28 ausgerichtet ist. Die Pendelabstützung 68 erstreckt sich in die Bohrung 56, um die Vorderachse 22 abzustützen. Sie ist durch einen Stift bzw. Bolzen 84 gesichert. Eine Dichtung, beispielsweise aus geschlossenzelligem Schaumgummi dichtet das hintere Pendellager 43b gegenüber dem Differentialgehäuse 40 ab.

Eine Antriebswelle 30 ersteckt sich durch die Pendelabstützung 68 und die Bohrung 56 in im wesentlichen konzentrischer Ausrichtung mit der Pendelachse 28. Das bezüglich der Fahrzeugausrichtung vordere Ende 48 der Antriebswelle 30 ist antriebsmäßig (über die Zahnräder 36 und 38) mit dem vorderen Ende 49 der Differentialeingangswelle 34 verbunden, welche durch das Differentialgehäuse 40 unterhalb und im wesentlichen parallel zur Pendelachse 28 abgestützt wird. Vorzugsweise ist die Differentialeingangswelle 34 im wesentlichen senkrecht zur Antriebsachse 54 ausgerichtet und weist auf ihrer Kraftabgabeseite 50 ein Kegelrad auf, welches mit dem Tellerrad des Differentialgetriebes 52 kämmt. Die Anteibswelle 30 ist durch ineinandergreifenden Antrieb der getriebenen Räder 36 und 38, die drehfest auf den Wellen 30 bzw. 34 befestigt sind, antriebsmäßig mit der Differentialeingangswelle 34 verbunden.

Ein oberes vorderes Lager 76 stützt das getriebene Zahnrad 36 und das vordere Ende 48 der Antriebswelle 30 an dem Verschlußdeckel 60 ab. Ferner stützt ein oberes hinteres Lager 78 das getriebene Zahnrad 36 und das vordere Ende 48 der Antriebswelle 30 gegenüber dem Hauptteil des Differentialgehäuses 40 ab. Hinter dem oberen hinteren Lager 78 ist zwischen dem angetriebenen Zahnrad 36 und dem Differentialgehäuse 40 eine Öldichtung 80 angeordnet. Ferner ist ein Dichtungs-O-Ring 82 zwischen der Antriebswelle 30 und dem angetriebenen Zahnrad 36 angeordnet, um den Hauptteil des Diffenrtialgehäuseinneren 58 gegenüber der Bohrung 56 abzudichten.

Die Differentialeingangswelle 34 stützt sich durch ein unteres vorderes Lager 88 und ein unteres hinteres Lager 94 an dem Verschlußdeckel 60 bzw. dem Hauptteil des Differentialgehäuses 40 ab. Die Eingangswelle 34 wird in ihrer Lage gehalten durch eine Haltescheibe 86, welche an die Eingangswelle 34 geschraubt ist und sich an dem unteren vorderen Lager 88 abstützt, um die Kraftabgabeseite 50 des Kegelrades in Anlage mit dem unteren hinteren Lager 94 zu ziehen. Auf der Eingangswelle 34 ist zwischen dem angetriebenen Zahnrad 38 und dem unteren hinteren Lager 88 ein Lastring 90 angeordnet. Ferner ist ein Sicherungs- oder Sprengring 92 auf der Differentialeingangswelle 34 angeordnet und gegenüber dem angetriebenen Zahnrad 38 abgestützt, um das angetriebene Zahnrad 38 in seiner Lage gegen den Lastring 90 zu halten.

Das hintere Ende 47 der Antriebswelle 30 steht mit einer Kupplung 46 in Verbindung, welche in dem Umschaltgetriebe 45 angeordnet ist. Vorzugsweise ist das Gehäuse des Umschaltgetriebes 45 konstruktiv so geformt, daß es einen Teil des Rahmens 16 bildet. Ferner wirken der Motor 14 und das Umschaltgetriebe 45 konstruktiv so zusammen, daß sie den Rahmen 16 bilden, der den vorderen Teil des Arbeitsfahrzeugs 12 trägt. Ein mittlerer (nicht gezeigter) Rahmen, der hinter dem Umschaltgetriebe 45 liegt, verbindet konstruktiv das Umschaltgetriebe 45 mit einer nicht gezeigten Hinterachse.

Der nicht näher dargestellte Eingang des konventionell ausgebildeten Umschaltgetriebes 45 wird durch den Motor 14 angetrieben, so daß die Motorleistung über das Umschaltgetriebe 45, die Kupplung 46, die Antriebswelle 30, die angetriebenen Zahnräder 36 und 38, die Differentialeingangswelle 34, das Differentialgetriebe 52 und die Antriebsachsen 54 an die Antriebsräder 18 übertragen wird.

Durch die Ausrichtung der Antriebswelle 30 entlang der Pendelachse 28 besteht keine Notwendigkeit für die Verwendung von Kreuzgelenken bei der Übertragung der Drehbewegung an die Vorderachse 22, weil die Lage der Antriebswelle 30 durch Pendelbewegungen der Vorderachse 22 nicht beeinflußt wird. Außerdem befindet sich hierdurch die Antriebswelle 30 nahe der Unterseite des Rahmens 16, was einen großen Freiraum zwischen dem Boden und der Antriebswelle 30 zur Folge hat. Teils weil sich die Antriebswelle 30 durch die Bohrung 56 erstreckt, teils weil Kreuzgelenke im Zusammenhang mit der Antriebswelle 30 vermieden werden und teils wegen des großen Freiraumes der Antriebswelle 30 über dem Boden, kann auf eine Abschirmung der Antriebswelle 30 ganz oder teilweise verzichtet werden.

Da während einer Pendelung der Vorderachse 22 die Antriebswelle 30 in der Pendelachse 28 bleibt und weil Kreuzgelenke sowie eine Abschirmung der Antriebswelle 30 überflüssig sind, wird der für die Übertragung der Drehbewegung von dem Umschaltgetriebe 45 zur Vorderachse 22 erforderliche Bauraum auf ein Minimum reduziert werden. Daher kann die Übertragung der Antriebsleistung an die Vorderachse 22 auch dann ungehindert erfolgen, wenn der Bauraum zwischen der Vorderachse 22 und dem Umschaltgetriebe 45 dadurch begrenzt ist, weil das Umschaltgetriebes 45 vor einer auf einem Rahmen 16 montierten Kabine 26 angeordnet ist.

Wie aus Fig. 3 ersichtlich, weist der Rahmen 16 im Bereich des Motors 14 eine reduzierte Breite auf und bildet Aussparungen oder Kanäle 24, in die die Antriebsräder 18 beim Verschwenken oder bei einem Lenkeinschlag eindringen können, und die eine gute Einsehbarkeit von der auf dem Rahmen 16 montierten Kabine 26 aus ermöglichen. Durch strichpunktierte Linien ist dargestellt, wie die eingeschlagenen Antriebsräder 18 in die Kanäle 24 eingreifen. Durch die Verminderung des für die Antriebswelle 30 erforderlichen Raumbedarfs wird vermieden, daß sich die Antriebsrädern 18 und die Antriebswelle 30 in die Quere kommen, wenn die Antriebsräder 18 voll eingeschlagen werden und in einen der Kanäle 24 eingreifen.

Die in Fig. 3 dargestellte strichpunktierte Position der Antriebsräder 22 setzt voraus, daß sich die Vorderachse 22 in einer mittleren oder waagerechten Lage befindet. Wenn die Antriebsachse 22 um die Pendelachse in eine der beiden Pendelrichtungen pendelt, bewegt sich eines der Antriebsräder, insbesondere das Antriebsrad 18, welches sich an dem Ende der Vorderachse 22 befindet, das sich relativ zum Rahmen 16 nach oben bewegt, näher an den Rahmen 16 oder an andere Schlepperteile heran und kann an diese anstoßen. Da jedoch die Achsen der Differentialeingangswelle 34 und des Differentialgetriebes 52 ausreichend weit unter der Pendelachse 28 liegen, führt eine Pendelung der Vorderachse 22 zu einer seitlichen Verschiebung der Vorderachse 22, wodurch das ansonsten an den Rahmen anstoßende Antriebsrad 18 von dem Rahmen 16 weg bewegt wird. Die seitliche Verschiebung repräsentiert die seitliche Komponente der radialen Verschwenkung bzw. der Drehung der Antriebsachse 22 um die Pendelachse 28. Natürlich beinhaltet das Verschwenken der Antriebsachse 22 auch eine vertikale Komponente.

Das gegenüberliegenden Antriebsrad 18, insbesondere das an dem Ende der Vorderachse 22 befestigte Antriebsrad 18, welches sich relativ zum Rahmen 16 nach unten bewegt, liegt bereits unter dem Schlepperrahmen 16, so daß es bei seiner weiteren Abwärtsbewegung nicht in Eingriff mit dem Rahmen 16 tritt. Wegen der hohen Lage der Antriebswelle 30 und seiner engen seitlichen Ausdehnung tritt bei einer Verlagerung des sich abwärts verschwenkenden Antriebsrades 18 nach unten und nach innen kein Eingriff zwischen der Antriebswelle 30 und dem Antriebsrad 18 auf. Die Pendelung der Vorderachse 22 erfolgt derart, daß bei einem Pendelwinkel von ungefähr 10 Grad, das sich nach unten bewegende Antriebsrad 18 nahezu in eine vertikale Ebene eingreift, die sich durch die Längsmittellinie des Arbeitsfahrzeuges 12 erstreckt.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise kann die Differentialeingangswelle 34 in das Differentialgehäuse 40 von hinten eintreten, wobei alle Vorteile der Erfindung erhalten bleiben.

## Patentansprüche

1. Arbeitsfahrzeug mit einem Motor (14), einem durch den Motor (14) angetriebenen Getriebe (45), welches ein Ausgangsteil aufweist, einem sich im wesentlichen in Fahrzeuglängsrichtung erstreckenden Rahmen (16) und einer angetriebenen Achse (22), die unter dem Rahmen (16) im wesentlichen quer zur Rahmenlängsausrichtung angeordnet und mit dem Rahmen (16) über eine im wesentlichen in Fahrzeuglängsrichtung ausgerichtete Pendelachse (28) pendelnd verbunden ist, und die lenkbare Räder (18), welche an den Enden der Achse (22) angeordnet und zur Lenkung an diesen verdrehbar angelenkt sind, eine antriebsmäßig mit den Rädern verbundene Eingangswelle (34) sowie eine antriebsmäßig mit dem Ausgangsteil des Getriebes (45) verbundene Antriebswelle (30) aufweist, deren Drehachse sich zwischen dem Ausgangsteil und der Achse (22) erstreckt, dadurch gekennzeichnet, daß die Drehachse der Antriebswelle (30) im wesentlichen kollinear zur Pendelachse (28) in einer festen Lage relativ zum Rahmen (16) ausgerichtet ist, daß die Antriebswelle (30) ein Ausgangsende (48) aufweist, welches über der Eingangswelle (34) liegt, und daß die Eingangswelle (34) unter der Pendelachse (28) liegt, im wesentlichen parallel zu dieser ausgerichtet ist und ein Eingangsende (49) aufweist, welches antriebsmäßig mit dem Ausgangsende (48) der Antriebswelle (30) verbunden ist.

2. Arbeitsfahrzeug nach Anspruch 1, dadurch gekennzeichnet, daß der Rahmen (16) Bereiche aufweist, die hinsichtlich der Fahrzeuglängsrichtung seitlich eingezogen sind, so daß sich Aussparungen (24) ausbilden in die die eingeschlagenen Räder (18) eingreifen können.

3. Arbeitsfahrzeug nach Anspruch 1 oder 2, dadurch gekennzeichnet, daß die Antriebsverbindung zwischen dem Ausgangsende (48) der Antriebswelle (30) und der Eingangswelle (34) Verzahnungen und miteinander kämmende Zahnräder (36, 38) aufweist, die auf der Antriebswelle (30) und der Eingangswelle (34) befestigt sind.

4. Arbeitsfahrzeug nach einem der Ansprüche 1 bis 3, dadurch gekennzeichnet, daß die Mittellinie der Achse (22) sich quer zur Rahmenlängsausrichtung erstreckt und daß die Eingangswelle (34) hinsichtlich der Fahrzeuglängsrichtung vor der quer verlaufenden Mittellinie liegt.

5. Arbeitsfahrzeug nach einem der Ansprüche 1 bis 4, dadurch gekennzeichnet, daß die Eingangswelle (34) im wesentlichen senkrecht zur querverlaufenden Mittellinie der Achse (22) ausgerichtet ist.

6. Arbeitsfahrzeug nach einem der Ansprüche 1 bis 5, dadurch gekennzeichnet, daß die Achse (22) ein Differentialgehäuse (40) mit einer Kammer (58), in der ein durch die Eingangswelle (34) angetriebenes Differentialgetriebe (52) angeordnet ist, und sich seitlich erstreckende Achsgehäuse (42) aufweist, die an dem Differentialgehäuse (40) befestigt sind und Antriebsachsen (54) beherbergen, welche mit ihren inneren Enden mit dem Differentialgetriebe und mit ihren äußeren Enden mit den lenkbaren Rädern (18) antriebsmäßig in Verbindung stehen, und daß sich durch einen oberen Bereich des Differentialgehäuses (40) eine Bohrung erstreckt, in der die Antriebswelle (30) drehbar gelagert ist.

## Claims

1. A work vehicle with an engine (14), a transmission (45) which is driven by the engine (14) and has an output part, a frame (16) extending essentially in the longitudinal direction of the vehicle, and a driven axle (22) which is arranged below the frame (16) essentially transverse to the longitudinal direction of the frame and which is attached to the frame (16) to oscillate about a swing axis (28) aligned substantially in the longitudinal direction of the vehicle and which comprises steerable wheels (18), which are arranged at the ends of the axle (22) and are pivoted thereto to be able to turn for the steering, an input shaft (34) connected to drive the wheels and a drive shaft (30) connected to be driven by the output part of the transmission (45), with its axis of rotation extending between the output part and the axle (22), characterized in that the axis of rotation of the drive shaft (30) is disposed substantially collinear with the swing axis (28) in a position fixed relative to the frame (16), in that the drive shaft (30) has an output end (48) which lies above the input shaft (34) and in that the input shaft (34) is disposes below the swing axis (28), substantially parallel thereto and has an input end (49) which is coupled to be driven by the output end (48) of the drive shaft (30).

2. A work vehicle according to claim 1, characterized in that the frame (16) has regions which are inset laterally in relation to the longitudinal direction of the vehicle, so that recesses (24) are formed in which the turned wheels (18) can penetrate.

3. A work vehicle according to claim 1 or 2, characterized in that the drive connection between the output end (48) of the drive shaft (30) and the input shaft (34) comprises teeth and gearwheels (36, 38) meshing with one another, which are fixed on the drive shaft (30) and the input shaft (34).

4. A work vehicle according to any of claims 1 to 3, characterized in that the centre line of the axle (22) extends transverse to the longitudinal direction of the frame and in that the input shaft (34) lies in front, in relation to the longitudinal direction of the vehicle, of the transversely extending centre line.

5. A work vehicle according to any of claims 1 to 4, characterized in that the input shaft (34) is aligned substantially perpendicular to the transversely running centre line of the axle (22).

6. A work vehicle according to any of claims 1 to 5, characterized in that the axle (22) comprises a differential housing (40) with a chamber (58) in which is arranged a differential gear (52) driven by the input shaft (34), and axle housings (42) extending to the sides, which are attached to the differential housing (40) and accommodate drive axles (54) which are in driving connection at their inner ends with the differential gear and at their outer ends with the steerable wheels (18), and in that a bore extends through an upper region of the differential housing (40), in which bore the drive shaft (30) is rotatably mounted.

## Revendications

1. Véhicule de travail comportant un moteur (14), une boîte de vitesses (45), qui est entraînée par le moteur (14) et comporte une partie de sortie, un châssis (16) qui s'étend sensiblement dans la direction longitudinale du véhicule, et un essieu moteur (22), qui est disposé au-dessous du châssis (16) sensiblement transversalement par rapport à la direction longitudinale du châssis et est relié de manière à pouvoir osciller au châssis (16) par l'intermédiaire d'un axe d'oscillation (28) représenté sensiblement dans la direction longitudinale du véhicule, et qui comporte des roues orientables (18), qui sont disposées aux extrémités de l'essieu (22) et qui, pour le braquage, sont articulées de manière à pouvoir pivoter sur ces extrémités, un arbre d'entrée (34), qui est relié selon une liaison motrice aux roues, ainsi qu'un arbre d'entraînement (30) relié selon une liaison motrice à la partie de sortie de la boîte de vitesses (45) et dont l'axe de rotation s'étend entre la partie de sortie et l'essieu (22), caractérisé en ce que l'axe de rotation de l'arbre d'entraînement (30) est orienté de manière à être sensiblement colinéaire à l'axe d'oscillation (28), dans une position fixe par rapport au châssis (16), que l'arbre d'entraînement (30) possède une extrémité de sortie (46), qui est située au-dessus de l'arbre d'entrée (34), et que l'arbre d'entrée (34) est située au-dessous de l'axe d'oscillation (28), et est sensiblement perpendiculaire à ce dernier et possède une extrémité d'entrée (49), qui est reliée selon une liaison motrice à l'extrémité de sortie (48) de l'arbre d'entraînement (30).

2. Véhicule de travail selon la revendication 1, caractérisé en ce que le châssis (16) comporte des parties, qui sont latéralement en retrait par rapport à la direction longitudinale du véhicule en formant des évidements (24), dans lesquels peuvent s'engager les roues braquées (18).

3. Véhicule de travail selon la revendication 1 ou 2, caractérisé en ce que la liaison motrice entre l'extrémité de sortie (48) de l'arbre d'entraînement (30) et l'arbre d'entrée (34) comporte des dents et des pignons (36, 38) qui engrènent entre eux et sont fixés sur l'arbre d'entraînement (30) et sur l'arbre d'entrée (34).

4. Véhicule de travail selon l'une des revendications 1 à 3, caractérisé en ce que l'axe médian de l'essieu (22) s'étend transversalement par rapport à la direction longitudinale du châssis et que l'arbre d'entrée (34) est situé, par rapport à la direction longitudinale du véhicule, en avant de l'axe central qui s'étend transversalement.

5. Véhicule de travail selon l'une des revendications 1 à 4, caractérisé en ce que l'arbre d'entrée (34) est orienté sensiblement perpendiculairement à l'axe central, qui est disposé transversalement, de l'essieu (22).

6. Véhicule de travail selon l'une des revendications 1 à 5, caractérisé en ce que l'essieu (22) est un carter différentiel (40) comportant une chambre (58), dans laquelle est disposée un mécanisme différentiel (52) entraîné par l'arbre d'entrée (34), et des carters d'essieu (42) qui s'étendent latéralement et qui sont fixés au carter de différentiel (40) et logent des axes d'entraînement (54), qui sont reliés selon une liaison motrice, par leurs extrémités intérieures, au carter du différentiel et, par leurs extrémités extérieures, aux roues orientables (18) et qu'un perçage, dans lequel l'arbre d'entraînement (30) est monté de manière à pouvoir tourner, traverse une partie supérieure du carter de différentiel (40).
